# EUROPEAN PATENT APPLICATION

(11) **EP 3 211 924 A1**
(43) Date of publication of application: **30.08.2017**
(21) Application number: 15852728.3
(22) Date of filing: 21.07.2015
(51) Int. Cl.: H04W 4/06, H04W 84/12

(54) **METHOD AND DEVICE FOR RESOURCE SHARING BETWEEN STATIONS IN WIRELESS LOCAL AREA NETWORK**

(30) Priority: 24.10.2014 CN 201410583740
(71) Applicant: ZTE Corporation, Shenzhen, Guangdong 518057 (CN)
(72) Inventor: XING, Weimin, Shenzhen, Guangdong 518057 (CN); LV, Kaiying, Shenzhen, Guangdong 518057 (CN); TIAN, Kaibo, Shenzhen, Guangdong 518057 (CN); YAO, Ke, Shenzhen, Guangdong 518057 (CN)
(74) Representative: Mozzi, Matteo
(86) International application number: PCT/CN2015/084722
(87) International publication number: WO 2016/062135

(57) **Abstract**

Provided are a method and device for sharing resources between stations in a Wireless Local Area Network (WLAN). A primary node receives a radio frame sent by a secondary node, the secondary node being a secondary node that gains a Transmission Opportunity (TXOP), and Uplink Multi-User (UL MU) shared information is carried in the radio frame; and the primary node sends a feedback frame to the secondary node in response to the radio frame, the feedback frame carrying multi-user information of shared secondary node(s), and the shared secondary node(s) being one or more secondary nodes that perform UL MU shared transmission with the secondary node which gains a TXOP. The present disclosure solves the problem in the related art where resources cannot be fully utilized because resources for UL MU transmission can only be allocated by a primary node, thus also enabling channel resources obtained through contention by a secondary node to be used for UL MU transmission.

## Description

### Technical Field

The present disclosure relates to the field of communications, and more particularly to a method and device for sharing resources between stations in a Wireless Local Area Network (WLAN).

### Background

At present, as more people perform data communication by using a WLAN, network loads of the WLAN are increasing. Moreover, with the increase of the quantity of users, the efficiency of the WLAN will obviously tend to be reduced. This problem cannot be solved by purely improving the rate. Therefore, an Institute of Electrical and Electronics Engineers (IEEE) sets up a relevant task group to be devoted to solving the problem of efficiency of the WLAN. Herein, parallel multi-user data transmission arouses wide concern and research by serving as a standby technology for solving the network efficiency.

The existing parallel multi-user data transmission technologies mainly include: a Multi-User Multiple Input Multiple Output (MU-MIMO) technology, an Orthogonal Frequency Division Multiple Access (OFDMA) technology, and an Interleave-Division Multiple-Access (IDMA) technology.

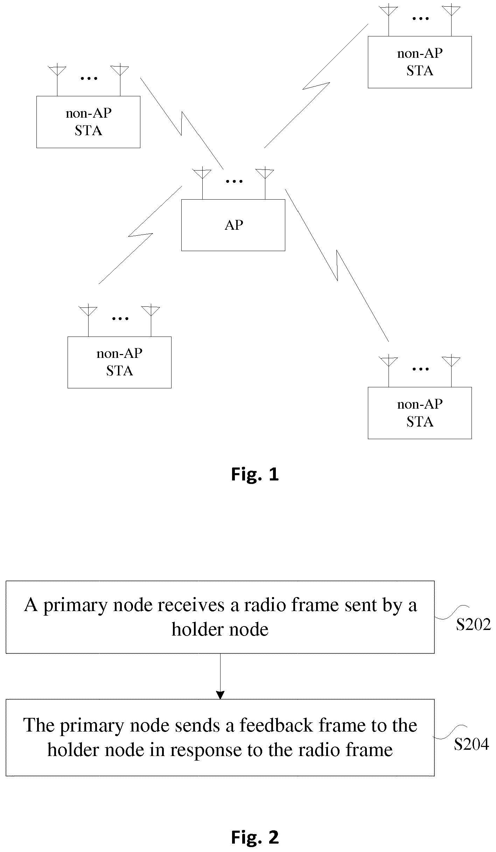

Fig. 1 is a structural diagram of a Basic Service Set (BSS) of a WLAN in the related art. As shown in Fig. 1, in a WLAN, an Access Point (AP) and a plurality of non-AP Stations (non-AP STAs) associated with the AP constitute a BSS.

The parallel multi-user data transmission in the WLAN generally refers to: sending, by a plurality of secondary nodes, data to a primary node simultaneously. Generally, this manner is called as Uplink Multi-User (UL MU). Or, the parallel multi-user data transmission refers to: sending, by a primary node, data to a plurality of secondary nodes simultaneously. This manner is called as Downlink Multi-User (DL MU). Usually, the primary node is an AP or a non-AP STA having a special ability, and the secondary nodes are general non-AP STAs.

In the related art, media resources needed for UL MU transmission are acquired by the primary node, and then the primary node sends scheduling and signaling indicators to trigger the UL MU transmission, thus solving the problems of UL MU interference and synchronization. So, even if a plurality of non-AP STAs may perform UL MU transmission mutually, resources thereof can only be allocated by the primary node and cannot be fully utilized.

### Summary

Embodiments of the present disclosure provide a method and device for sharing resources between stations in a WLAN, intended to solve the problem in the related art where resources cannot be fully utilized because resources for UL MU transmission can only be allocated by a primary node.

An embodiment of the present disclosure provides a method for sharing resources between stations in a WLAN, which may include: a primary node receives a radio frame sent by a secondary node, the secondary node being a secondary node that gains a Transmission Opportunity (TXOP), and the radio frame carrying UL MU shared information; and the primary node sends a feedback frame to the secondary node in response to the radio frame, the feedback frame carrying multi-user information of shared secondary node(s), and the shared secondary node(s) being one or more secondary nodes that perform UL MU shared transmission with the secondary node which gains a TXOP.

In certain embodiments, the UL MU shared information may include at least one of the following: information for indicating enabling of the UL MU shared transmission; information for indicating a transmission mode of the UL MU shared transmission; transmission parameter information of a radio frame to be sent next time after the secondary node sends the radio frame; and remaining time information of the TXOP.

In an embodiment of the present disclosure, the transmission mode may include at least one of the following: an OFDMA mode, a Frequency Division Multiple Access (FDMA) mode, an MU-MIMO mode, and an IDMA mode; and/or, the transmission parameter information may include at least one of the following: sending time length information of a radio frame to be sent next time, an occupied frequency resource, and a used number of streams.

In an embodiment of the present disclosure, the multi-user information may include at least one of the following: a user identity indicator of each shared secondary node; transmission parameter information for sending an uplink radio frame next time; information for giving a acknowledgement or error indicator to the uplink data frame sent by the shared secondary node(s); adjustment parameter information of the shared secondary node(s); information for indicating whether to page the shared secondary node(s) to perform the UL MU transmission; and data stream identity and acknowledgement message sequence control information, the data stream identity and acknowledgement message sequence control information being used for giving a acknowledgement or error indicator to a data unit for a predetermined serial number of a predetermined data stream of a corresponding secondary node.

In an embodiment of the present disclosure, the transmission parameter information may include at least one of the following: a sending time length of a radio frame to be sent next time by the shared secondary node(s), an occupied frequency resource, and a used number of streams; and/or, the adjustment parameter information may include at least one of the following: a power adjustment parameter, a frequency offset adjustment parameter, a sending delay adjustment parameter, and a rate adjustment parameter.

In an embodiment of the present disclosure, the sending time length of the radio frame to be sent next time by the shared secondary node(s) may be identical to a sending duration indicated by the secondary node; and/or, a frequency resource occupied by the shared secondary node(s) and/or a used number of streams, included in the transmission parameter information, may be orthogonal to a frequency resource occupied by the secondary node and/or a used number of streams.

In an embodiment of the present disclosure, the feedback frame may be a radio frame or a plurality of radio frames sent in parallel and/or in series.

In an embodiment of the present disclosure, the method may further include: the primary node receives uplink data frames sent by the secondary node and the shared secondary node(s) in parallel.

In an embodiment of the present disclosure, the method may further include at least one of the following: when the uplink data frame sent to the primary node by the shared secondary node(s) has an error, the primary node sends error indication information to the shared secondary node(s), the error indication information being used for indicating error recovery transmission of the shared secondary node(s); when the uplink data frame sent to the primary node by the secondary node has an error, the primary node sends error indication information to the secondary node, the error indication information being used for indicating error recovery transmission of the secondary node; and when the uplink data frame sent to the primary node by the secondary node has an error, the secondary node executes an error recovery transmission process after waiting for an error recovery time.

In an embodiment of the present disclosure, the error recovery time may be a channel detection time of the secondary node after the secondary node determines that the uplink data frame has an error.

In an embodiment of the present disclosure, the feedback frame may include indication information for the secondary node, the indication information being a acknowledgement message or an error indicator.

According to another embodiment of the present disclosure, a method for sharing resources between stations in a WLAN is provided, which may include: a secondary node gains a TXOP; the secondary node sends a radio frame to a primary node, the radio frame carrying UL MU shared information; and the secondary node receives a feedback frame sent, by the primary node, in response to the radio frame, the feedback frame carrying multi-user information of shared secondary node(s), and the shared secondary node(s) being one or more secondary nodes that perform UL MU shared transmission with the secondary node which gains a TXOP.

In an embodiment of the present disclosure, the UL MU shared information may include at least one of the following: information for indicating enabling of the UL MU shared transmission; information for indicating a transmission mode of the UL MU shared transmission; transmission parameter information of a radio frame to be sent next time after the secondary node sends the radio frame; and remaining time information of the TXOP.

In an embodiment of the present disclosure, the transmission mode may include at least one of the following: an OFDMA mode, an FDMA mode, an MU-MIMO mode, and an IDMA mode; and/or, the transmission parameter information may include at least one of the following: sending time length information of a radio frame to be sent next time, an occupied frequency resource, and a used number of streams.

In an embodiment of the present disclosure, the multi-user information may include at least one of the following: transmission parameter information for sending an uplink radio frame next time; information for giving a acknowledgement or error indicator to the uplink data frame sent by the shared secondary node(s); adjustment parameter information of the shared secondary node(s); information for indicating whether to page the shared secondary node(s) to perform the UL MU transmission; and data stream identity and acknowledgement message sequence control information, the data stream identity and acknowledgement message sequence control information being used for giving a acknowledgement or error indicator to a data unit for a predetermined serial number of a predetermined data stream of a corresponding secondary node.

In an embodiment of the present disclosure, the transmission parameter information may include at least one of the following: a sending time length of a radio frame to be sent next time by the shared secondary node(s), an occupied frequency resource, and a used number of streams; and/or, the adjustment parameter information may include at least one of the following: a power adjustment parameter, a frequency offset adjustment parameter, and a sending delay adjustment parameter.

In an embodiment of the present disclosure, the sending time length of the radio frame to be sent next time by the shared secondary node(s) may be identical to a sending duration indicated by the secondary node; and/or, a frequency resource occupied by the shared secondary node(s) and/or a used number of streams, included in the transmission parameter information, may be orthogonal to a frequency resource occupied by the secondary node and/or a used number of streams.

In an embodiment of the present disclosure, the feedback frame may be a radio frame or a plurality of radio frames sent in parallel and/or in series.

In an embodiment of the present disclosure, the method may further include: the secondary node and the shared secondary node(s) send uplink data frames to the primary node in parallel.

In an embodiment of the present disclosure, the method may further include at least one of the following: when the uplink data frame sent to the primary node by the shared secondary node(s) has an error, the primary node sends error indication information to the shared secondary node(s), the error indication information being used for indicating error recovery transmission of the shared secondary node(s); when the uplink data frame sent to the primary node by the secondary node has an error, the primary node sends error indication information to the secondary node, the error indication information being used for indicating error recovery transmission of the secondary node; and when the uplink data frame sent to the primary node by the secondary node has an error, the secondary node executes an error recovery transmission process after waiting for an error recovery time.

In an embodiment of the present disclosure, the error recovery time may be a channel detection time of the secondary node after the secondary node determines that the uplink data frame has an error.

In an embodiment of the present disclosure, the feedback frame may include indication information for the secondary node, the indication information being a acknowledgement message or an error indicator.

According to another embodiment of the present disclosure, a method for sharing resources between stations in a WLAN is provided, which may include: a shared secondary node(s) receives a feedback frame sent by a primary node, the feedback frame being sent, by the primary node, in response to a radio frame sent by a secondary node that gains a TXOP, the shared secondary node(s) being one or more secondary nodes that perform UL MU shared transmission with the secondary node which gains a TXOP, and the feedback frame carrying multi-user information of the shared secondary node(s); and the shared secondary node(s) and the secondary node send uplink data frames to the primary node in parallel.

The multi-user information may include at least one of the following: transmission parameter information for sending an uplink radio frame next time; information for giving a acknowledgement or error indicator to the uplink data frame sent by the shared secondary node(s); adjustment parameter information of the shared secondary node(s); information for indicating whether to page the shared secondary node(s) to perform the UL MU transmission; and data stream identity and acknowledgement message sequence control information, the data stream identity and acknowledgement message sequence control information being used for giving a acknowledgement or error indicator to a data unit for a predetermined serial number of a predetermined data stream of a corresponding secondary node.

In an embodiment of the present disclosure, the transmission parameter information may include at least one of the following: a sending time length of a radio frame to be sent next time by the shared secondary node(s), an occupied frequency resource, and a used number of streams; and/or, the adjustment parameter information may include at least one of the following: a power adjustment parameter, a frequency offset adjustment parameter, and a sending delay adjustment parameter.

In an embodiment of the present disclosure, the sending time length of the radio frame to be sent next time by the shared secondary node(s) may be identical to a sending duration indicated by the secondary node; and/or, a frequency resource occupied by the shared secondary node(s) and/or a used number of streams, included in the transmission parameter information, may be orthogonal to a frequency resource occupied by the secondary node and/or a used number of streams.

In an embodiment of the present disclosure, the feedback frame may be a radio frame or a plurality of radio frames sent in parallel and/or in series.

In an embodiment of the present disclosure, the method may further include at least one of the following: when the uplink data frame sent to the primary node by the shared secondary node(s) has an error, the primary node sends error indication information to the shared secondary node(s), the error indication information being used for indicating error recovery transmission of the shared secondary node(s); when the uplink data frame sent to the primary node by the secondary node has an error, the primary node sends error indication information to the secondary node, the error indication information being used for indicating error recovery transmission of the secondary node; and when the uplink data frame sent to the primary node by the secondary node has an error, the secondary node executes an error recovery transmission process after waiting for an error recovery time.

In an embodiment of the present disclosure, the error recovery time may be a channel detection time of the secondary node after the secondary node determines that the uplink data frame has an error.

According to another embodiment of the present disclosure, a device for sharing resources between stations in a WLAN is provided, which may be applied to a primary node and may include: a first receiving module, configured to receive a radio frame sent by a secondary node, the secondary node being a secondary node that gains a TXOP, and the radio frame carrying UL MU shared information; and a first sending module, configured to send a feedback frame to the secondary node in response to the radio frame, the feedback frame carrying multi-user information of a shared secondary node(s), and the shared secondary node(s) being one or more secondary nodes that perform UL MU shared transmission with the secondary node which gains a TXOP.

In an embodiment of the present disclosure, the device may further include: a second receiving module, configured to receive uplink data frames sent by the secondary node and the shared secondary node(s) in parallel.

In an embodiment of the present disclosure, the first sending module may be further configured to: send, when the uplink data frame sent to the primary node by the shared secondary node(s) has an error, error indication information to the shared secondary node(s), the error indication information being used for indicating error recovery transmission of the shared secondary node(s); send, when the uplink data frame sent to the primary node by the secondary node has an error, error indication information to the secondary node, the error indication information being used for indicating error recovery transmission of the secondary node; and indicate, when the uplink data frame sent to the primary node by the secondary node has an error, the secondary node to execute an error recovery transmission process after waiting for an error recovery time.

According to a further embodiment of the present disclosure, a device for sharing resources between stations in a WLAN is provided, which may be applied to a secondary node and may include: a gaining module, configured to gain a TXOP; a second sending module, configured to send a radio frame to a primary node, the radio frame carrying UL MU shared information; and a third receiving module, configured to receive a feedback frame sent, by the primary node, in response to the radio frame, the feedback frame carrying multi-user information of a shared secondary node(s), and the shared secondary node(s) being one or more secondary nodes that perform UL MU shared transmission with the secondary node which gains a TXOP.

In an embodiment of the present disclosure, the device may further include: a third sending module, configured to send uplink data frames to the primary node in parallel with the shared secondary node(s).

In an embodiment of the present disclosure, the third receiving module may be further configured to: receive, when the uplink data frame sent to the primary node by the secondary node has an error, error indication information sent by the primary node, the error indication information being used for indicating error recovery transmission of the secondary node; and/or, execute, when the uplink data frame sent to the primary node by the secondary node has an error, an error recovery transmission process after waiting for an error recovery time.

According to a yet further embodiment of the present disclosure, a device for sharing resources between stations in a WLAN is provided, which may be applied to a shared secondary node(s) and may include: a fourth receiving module, configured to receive a feedback frame sent by a primary node, the feedback frame being sent, by the primary node, in response to a radio frame sent by a secondary node that gains a TXOP, the shared secondary node(s) being one or more secondary nodes that perform UL MU shared transmission with the secondary node which gains a TXOP, and the feedback frame carrying multi-user information of the shared secondary node(s); and a fourth sending module, configured to send uplink data frames to the primary node in parallel with the secondary node.

In an embodiment of the present disclosure, the fourth receiving module may be further configured to: receive, when the uplink data frame sent to the primary node by the shared secondary node(s) has an error, error indication information sent by the primary node, the error indication information being used for indicating error recovery transmission of the shared secondary node(s).

By means of the embodiments of the present disclosure, a primary node receives a radio frame sent by a secondary node, the secondary node being a secondary node that gains a TXOP, and the radio frame carrying UL MU shared information; and the primary node sends a feedback frame to the secondary node in response to the radio frame, the feedback frame carrying multi-user information of a shared secondary node(s), and the shared secondary node(s) being one or more secondary nodes that perform UL MU shared transmission with the secondary node which gains a TXOP. The present disclosure solves the problem in the related art where resources cannot be fully utilized because resources for UL MU transmission can only be allocated by the primary node, thus also enabling channel resources obtained through contention by the secondary node to be used for UL MU transmission.

### Brief Description of the Drawings

The drawings illustrated herein are intended to provide a further understanding for the present disclosure, and form a part of the present application. The schematic embodiments and illustrations of the present disclosure are intended to explain the present disclosure.
Fig. 1 is a structural diagram of a BSS in a WLAN in the related art.
Fig. 2 is a flowchart 1 of a method for sharing resources between stations in a WLAN according to an embodiment of the present disclosure.
Fig. 3 is a flowchart 2 of a method for sharing resources between stations in a WLAN according to an embodiment of the present disclosure.
Fig. 4 is a flowchart 3 of a method for sharing resources between stations in a WLAN according to an embodiment of the present disclosure.
Fig. 5 is a block diagram 1 of a device for sharing resources between stations in a WLAN according to an embodiment of the present disclosure.
Fig. 6 is a block diagram 1 of a device for sharing resources between stations in a WLAN according to an embodiment of the present disclosure.
Fig. 7 is a block diagram 1 of a device for sharing resources between stations in a WLAN according to an embodiment of the present disclosure.
Fig. 8 is a block diagram 2 of a device for sharing resources between stations in a WLAN according to an embodiment of the present disclosure.
Fig. 9 is a block diagram 2 of a device for sharing resources between stations in a WLAN according to an embodiment of the present disclosure.
Fig. 10 is a structural diagram of a feedback frame according to an embodiment of the present disclosure.
Figs. 11a-11b are format diagrams of a multi-user control/acknowledgement message field according to an embodiment of the present disclosure.
Fig. 12 is a schematic diagram 1 of UL MU sharing of station contention resources according to an embodiment of the present disclosure.
Fig. 13 is a schematic diagram 2 of UL MU sharing of station contention resources according to an embodiment of the present disclosure.
Fig. 14 is a schematic diagram of a data sending error recovery process of a shared secondary node(s) according to an embodiment of the present disclosure;
Fig. 15 is a schematic diagram 1 of a data sending error recovery process of a holder node according to an embodiment of the present disclosure;
Fig. 16 is a schematic diagram 2 of a data sending error recovery process of a holder node according to an embodiment of the present disclosure;
Fig. 17 is a schematic diagram of a data sending error recovery process of all nodes according to an embodiment of the present disclosure;
Fig. 18 is a schematic diagram of a radio frame carrying multi-user shared information and a feedback frame thereof according to an embodiment of the present disclosure; and
Fig. 19 is a schematic diagram of radio frame carrying multi-user shared information and a feedback frame thereof according to an embodiment of the present disclosure.

### Detailed Description of the Embodiments

It is important to note that embodiments in the present application and characteristics in the embodiments may be combined under the condition of no conflicts. The present disclosure will be illustrated herein below with reference to the drawings and in conjunction with the embodiments in detail.

The steps shown in the flowchart of the drawings may be executed in a computer system including, for example, a set of computer-executable instructions. Moreover, although a logic sequence is shown in the flowchart, the shown or described steps may be executed in a sequence different from the sequence here under certain conditions.

The present embodiment provides a method for sharing resources between stations in a WLAN. Fig. 2 is a flowchart 1 of a method for sharing resources between stations in a WLAN according to an embodiment of the present disclosure. As shown in Fig. 2, the method includes the steps S202 to S204.

At Step S202: A primary node receives a radio frame sent by a holder node, the holder node being a secondary node that gains a TXOP, and the radio frame carrying UL MU shared information. To facilitate better descriptions, the secondary node that gains the TXOP and sends the radio frame is called as the holder node.

At Step S204: The primary node sends a feedback frame to the holder node in response to the radio frame, the feedback frame carrying multi-user information of a shared secondary node(s), and the shared secondary node(s) being one or more secondary nodes that perform UL MU shared transmission with the holder node.

In the abovementioned steps, a manner of sharing the TXOP with other secondary nodes after the holder node gains the TXOP is adopted. Thus, resources obtained by the holder node through contention will be used for multi-user transmission. Compared with the technical solution in the related art where resources for multi-user transmission are only allocated by means of the primary node, the present disclosure improves the spectral efficiency.

The abovementioned embodiment and an implementation mode are described from the perspective of the primary node. Descriptions will be made herein below from the perspective of the holder node.

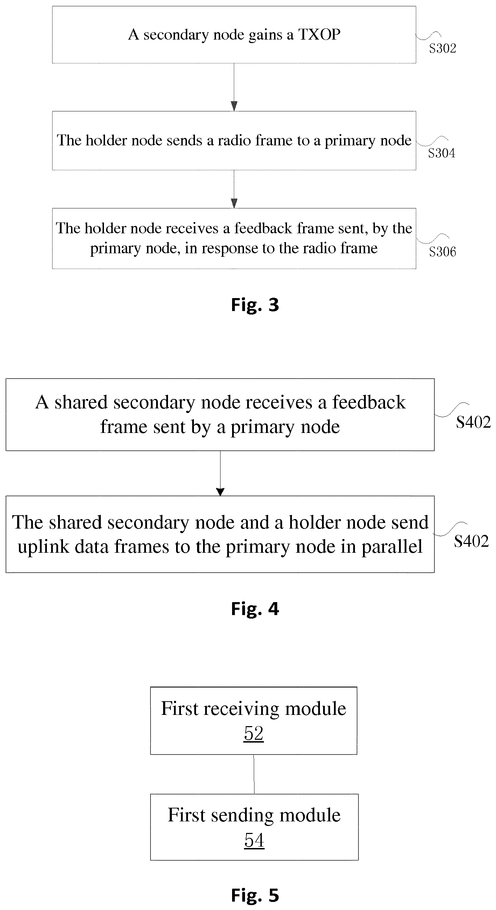

An embodiment of the present disclosure also provides a method for sharing resources between stations in a WLAN. Fig. 3 is a flowchart 2 of a method for sharing resources between stations in a WLAN according to an embodiment of the present disclosure. As shown in Fig. 3, the flow includes the steps S302 to S306.

At Step S302: A secondary node gains a TXOP, the node that gains the TXOP being called as a holder node.

At Step S304: The holder node sends a radio frame to a primary node, the radio frame carrying UL MU shared information.

At Step S306: The holder node receives a feedback frame sent, by the primary node, in response to the radio frame, the feedback frame carrying multi-user information of a shared secondary node(s), and the shared secondary node(s) being one or more secondary nodes that perform UL MU shared transmission with the holder node.

The abovementioned embodiment and the implementation mode are described from the perspective of the primary node and the holder node. Descriptions will be made herein below from the perspective of the shared secondary node(s).

The present embodiment also provides a method for sharing resources between stations in a WLAN. Fig. 4 is a flowchart 3 of a method for sharing resources between stations in a WLAN according to an embodiment of the present disclosure. As shown in Fig. 4, the flow includes the steps S402 to S404.

At Step S402: A shared secondary node(s) receives a feedback frame sent by a primary node, the feedback frame being sent, by the primary node, in response to a radio frame sent by a secondary node (i.e., holder node) that gains a TXOP, the shared secondary node(s) being one or more secondary nodes that perform UL MU shared transmission with the secondary node which gains a TXOP, and the feedback frame carrying multi-user information of the shared secondary node(s).

At Step S404: The shared secondary node(s) and the holder node send uplink data frames to the primary node in parallel.

After Step S402 and Step S404, the primary node will inform the shared secondary node(s) of UL MU shared transmission. In an embodiment, the shared secondary node(s) may self-decide not to perform UL MU shared transmission. In another embodiment, the shared secondary node(s) performs UL MU shared transmission. So, the primary node will receive uplink data frames sent by the holder node and the shared secondary node(s) in parallel.

In shared transmission, there may be an uplink data frame error. In the present embodiment, several processing modes are also provided.

Processing mode one: when the uplink data frame sent to the primary node by the shared secondary node(s) has an error, the primary node sends error indication information to the shared secondary node(s), the error indication information being used for indicating error recovery transmission of the shared secondary node(s).

Processing mode two: when the uplink data frame sent to the primary node by the secondary node has an error, the primary node sends error indication information to the secondary node, the error indication information being used for indicating error recovery transmission of the secondary node.

Processing mode three: when the uplink data frame sent to the primary node by the secondary node has an error, the secondary node executes an error recovery transmission process after waiting for an error recovery time.

In the processing mode three, the error recovery time may be a preset experience point. In an embodiment, the error recovery time may be a channel detection time of the holder node after determining that the uplink data frame has an error.

An embodiment of the present disclosure also provides a device for sharing resources between stations in a WLAN. The device is applied to a primary node and may be configured to implement the method embodiment of the present disclosure in Fig. 2. Fig. 5 is a block diagram 1 of a device for sharing resources between stations in a WLAN according to an embodiment of the present disclosure.

As shown in Fig. 5, the device includes a first receiving module 52 and a first sending module 54.

The first receiving module 52 is configured to receive a radio frame sent by a secondary node, the secondary node being a secondary node that gains a TXOP, and the radio frame carrying UL MU shared information.

The first sending module 54 is coupled to the first receiving module 52, and is configured to send a feedback frame to the secondary node in response to the radio frame, the feedback frame carrying multi-user information of a shared secondary node(s), and the shared secondary node(s) being one or more secondary nodes that perform UL MU shared transmission with the secondary node which gains a TXOP.

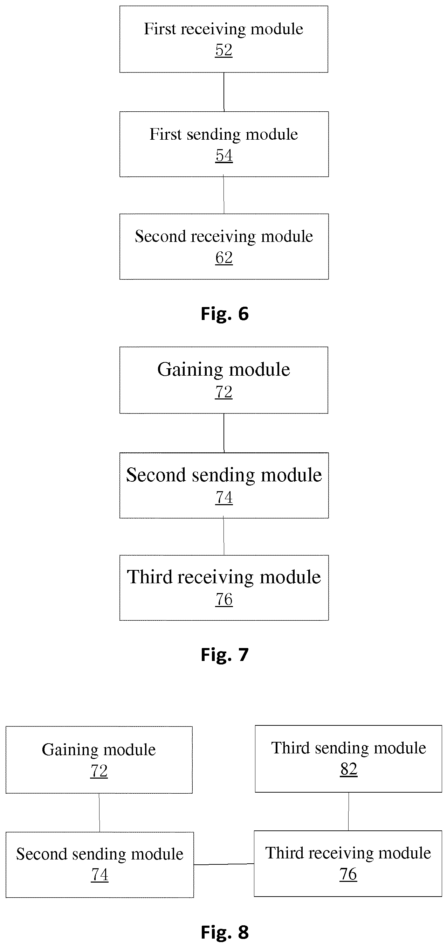

Fig. 6 is a block diagram 1 of a device for sharing resources between stations in a WLAN according to an embodiment of the present disclosure. As shown in Fig. 6, the device further includes: a second receiving module 62, coupled to the first sending module 54, and configured to receive uplink data frames sent by the secondary node and the shared secondary node(s) in parallel.

In an embodiment, the first sending module 54 is further configured to execute at least one of the following operations.

When the uplink data frame sent to the primary node by the shared secondary node(s) has an error, the first sending module 54 sends error indication information to the shared secondary node(s), the error indication information being used for indicating error recovery transmission of the shared secondary node(s).

When the uplink data frame sent to the primary node by the secondary node has an error, the first sending module 54 sends error indication information to the secondary node, the error indication information being used for indicating error recovery transmission of the secondary node.

When the uplink data frame sent to the primary node by the secondary node has an error, the first sending module 54 indicates the secondary node to execute an error recovery transmission process after waiting for an error recovery time.

It is important to note that the device for sharing resources between stations in a WLAN described in the device embodiment corresponds to the abovementioned method embodiment in Fig. 2. A specific implementation process thereof has been illustrated in detail in the method embodiment, and will not be elaborated herein.

An embodiment of the present disclosure also provides a device for sharing resources between stations in a WLAN. The device is applied to a secondary node (holder node). Fig. 7 is a block diagram 2 of a device for sharing resources between stations in a WLAN according to an embodiment of the present disclosure.

As shown in Fig. 7, the device includes a gaining module 72, a second sending module 74 and a third receiving module 76.

The gaining module 72 is configured to gain a TXOP.

The second sending module 74 is coupled to the gaining module 72, and is configured to send a radio frame to a primary node, the radio frame carrying UL MU shared information.

The third receiving module 76 is coupled to the second sending module 74, and is configured to receive a feedback frame sent, by the primary node, in response to the radio frame, the feedback frame carrying multi-user information of a shared secondary node(s), and the shared secondary node(s) being one or more secondary nodes that perform UL MU shared transmission with the holder node.

Fig. 8 is a block diagram 2 of a device for sharing resources between stations in a WLAN according to an embodiment of the present disclosure. As shown in Fig. 8, the device further includes: a third sending module 82, coupled to the third receiving module 76, and configured to send uplink data frames to the primary node in parallel with the shared secondary node(s).

In an embodiment, the third receiving module is further configured to execute at least one of the following operations.

When the uplink data frame sent to the primary node by the holder node has an error, the third receiving module receives error indication information sent by the primary node, and the error indication information being used for indicating error recovery transmission of the holder node; and

When the uplink data frame sent to the primary node by the holder node has an error, the third receiving module performs an error recovery transmission process after waiting for an error recovery time.

It is important to note that the device for sharing resources between stations in a WLAN described in the device embodiment corresponds to the abovementioned method embodiment in Fig. 3. A specific implementation process thereof has been illustrated in detail in the method embodiment, and will not be elaborated herein.

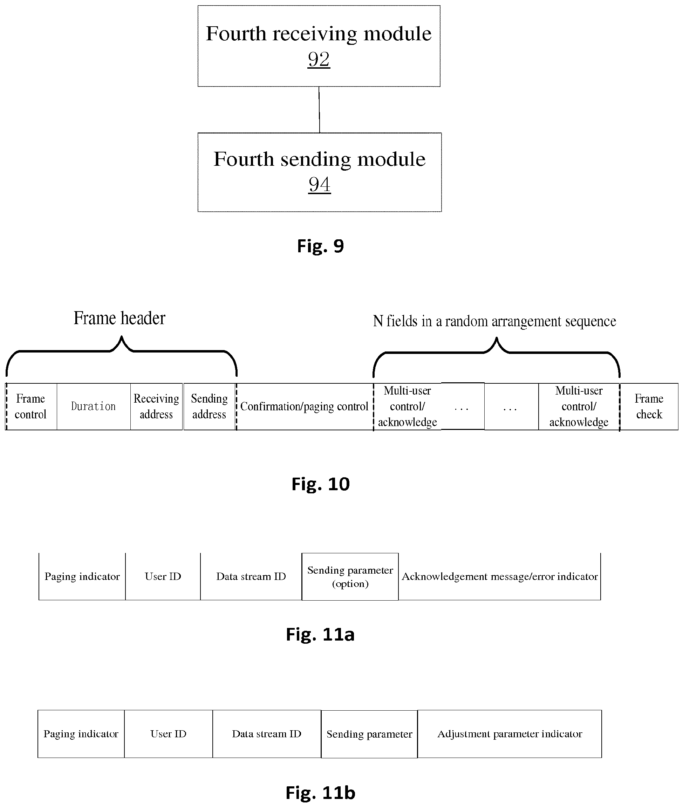

An embodiment of the present disclosure also provides a device for sharing resources between stations in a WLAN. The device is applied to a shared secondary node(s). Fig. 9 is a block diagram 3 of a device for sharing resources between stations in a WLAN according to an embodiment of the present disclosure. As shown in Fig. 9, the device includes a fourth receiving module 92 and a fourth sending module 94.

the fourth receiving module 92 is configured to receive a feedback frame sent by a primary node, the feedback frame being sent, by the primary node, in response to a radio frame sent by a secondary node that gains a TXOP, the shared secondary node(s) being one or more secondary nodes that perform UL MU shared transmission with the secondary node which gains a TXOP, and the feedback frame carrying multi-user information of the shared secondary node(s); and
the fourth sending module 94 is coupled to the fourth receiving module 92, and configured to send uplink data frames to the primary node in parallel with the secondary node.

In an embodiment, the fourth receiving module 92 is further configured to: receive, when the uplink data frame sent to the primary node by the shared secondary node(s) has an error, error indication information sent by the primary node, the error indication information being used for indicating error recovery transmission of the shared secondary node(s).

It is important to note that the device for sharing resources between stations in a WLAN described in the device embodiment corresponds to the abovementioned method embodiment in Fig. 4. A specific implementation process thereof has been illustrated in detail in the method embodiment, and will not be elaborated herein.

In the above descriptions, UL MU shared information is involved. As long as the secondary node carries the UL MU shared information in the radio frame, the primary node may learn of that UL MU shared transmission can be performed, and the secondary node may indicate the primary node to enable the UL MU shared transmission in an explicit indication manner. Or, the secondary node may also use an implication manner. If the radio frame carries the UL MU shared information associated with UL MU sharing, the primary node may learn of that the UL MU shared transmission can be performed. Certainly, as an implementation mode, the radio frame may further carry other information. Therefore, in an embodiment, the UL MU shared information may include at least one of the following: information for indicating enabling of the UL MU shared transmission; information for indicating a transmission mode of the UL MU shared transmission; transmission parameter information of a radio frame to be sent next time after the secondary node sends the radio frame; and remaining time information of the TXOP. The UL MU shared information listed herein is illustrated, but not limited thereto.

The transmission mode is involved in the UL MU shared information. In an embodiment, the transmission mode may include at least one of the following: an OFDMA mode, an FDMA mode, an MU-MIMO mode, and an IDMA mode. The transmission parameter information is involved in the UL MU shared information. In another embodiment, the transmission parameter information may include at least one of the following: sending time length information of a radio frame to be sent next time, an occupied frequency resource (e.g., frequency band), and a used number of streams. The two embodiments involved in the present paragraph may be used individually or integrally.

From the above descriptions, multi-user information is involved. Herein, the feedback frame carries the multi-user information of the shared secondary node(s), and the shared secondary node(s) may learn of that the UL MU shared transmission can be performed by means of the information. The multi-user information is carried in the feedback frame, and the feedback frame may be a radio frame or a plurality of radio frames sent in parallel and/or in series. Specific contents included in the multi-user information may be selected according to practical conditions. In an embodiment, the multi-user information may include at least one of the following: a user identity indicator of each shared secondary node(s); transmission parameter information for sending an uplink radio frame next time; information for giving a acknowledgement or error indicator to the uplink data frame sent by the shared secondary node(s); adjustment parameter information of the shared secondary node(s); information for indicating whether to page the shared secondary node(s) to perform the UL MU transmission; and data stream identity and acknowledgement message sequence control information, the data stream identity and acknowledgement message sequence control information being used for giving a acknowledgement or error indicator to a data unit for a predetermined serial number of a predetermined data stream of a corresponding secondary node.

The transmission parameter information is involved in the abovementioned multi-user information. In an embodiment, the transmission parameter information may include at least one of the following: a sending time length of a radio frame to be sent next time by the shared secondary node(s), an occupied frequency resource (e.g., frequency band), and a used number of streams. The adjustment parameter information is also involved in the multi-user information, and in another embodiment, the adjustment parameter information may include at least one of the following: a power adjustment parameter, a frequency offset adjustment parameter, and a sending delay adjustment parameter. The two embodiments involved in the present paragraph may be used individually or integrally. By means of the transmission parameter information and/or the adjustment parameter information, the problems of synchronization and interference may be solved to a certain extent. For example, the sending time length of the radio frame to be sent next time by the shared secondary node(s) may be identical to a sending duration indicated by the holder node; and for another example, a frequency resource occupied by the shared secondary node(s) and/or a used number of streams may be orthogonal to a frequency resource occupied by the secondary node and/or a used number of streams.

From the above descriptions, the feedback frame is sent to the holder node, and includes indication information for the holder node. In an implementation mode, the indication information may be a acknowledgement message or an error indicator. The information or content of the holder node may be always included in TXOP transmission.

Illustrations with several embodiments will be made herein below.

In the following embodiments, a secondary node gains a TXOP and becomes a holder node; the holder node sends a radio frame carrying UL MU shared information to a primary node; and the primary node sends a feedback frame to confirm the radio frame sent by the holder node, the feedback frame including a multi-user control and/or acknowledgement message of a shared secondary node(s).

In certain embodiments, the UL MU shared information may include at least one of the following: information for indicating enabling of UL MU shared transmission; information for indicating a multi-user transmission mode. For example, the transmission mode including at least one of the following: an uplink OFDMA mode, an uplink MU-MIMO mode, and an uplink IDMA mode; and transmission parameter information of a radio frame to be sent next time by the holder node. For example, the parameter information may include at least one of the following: sending time length information of the radio frame to be sent next time, an occupied frequency resource, and a used number of streams.

In another implementation mode, the UL MU shared information may further include: remaining time information of the TXOP gained by the holder node.

The multi-user control/acknowledgement message may be used for indicating whether to page the shared secondary node(s) to perform the UL MU transmission. For example, information for indicating whether to page the shared secondary node(s) to perform the UL MU transmission may be included. In an implementation mode, the multi-user control/acknowledgement message may also include at least one of the following: transmission parameter information for indicating resending of an uplink radio frame. For example, the transmission parameter information includes at least one of the following: a sending time length of a radio frame to be sent next time by the shared secondary node(s), an occupied frequency resource, and a used number of streams; information for giving a acknowledgement or error indicator to the uplink data frame recently sent by the shared secondary node(s); and adjustment parameter information of the shared secondary node(s). For example, the adjustment parameter information may include at least one of the following: a power adjustment parameter, a frequency offset adjustment parameter, a sending delay adjustment parameter, and/or link adaptation feedback information.

In an embodiment, the holder node and the one or more shared secondary node(s)s send uplink data frames to the primary node in parallel, the parallel sending mode including one of the following: an uplink OFDMA mode, an uplink MU-MIMO mode, and an uplink IDMA mode.

In an embodiment, there are many modes of sending, by the holder node and the shared secondary node(s), the uplink data frames to the primary node. In an implementation mode of the present embodiment, when data sent by the shared secondary node(s) has an error, the shared secondary node(s) waits for an error indicator of the primary node, and executes a next error recovery transmission process.

In an embodiment, there are many modes of sending, by the holder node and the shared secondary node(s), the uplink data frames to the primary node. In another implementation mode of the present embodiment, when data sent by the holder node has an error, the holder node waits for an error indicator of an AP or waits for an error recovery time Δt, and executes a next error recovery transmission process. In certain embodiments, the error recovery time Δt refers to a channel detection time of the node after judging a data sending error.

In the above mentioned embodiments, a mode of sharing, after a station obtains resources through contention, the resources with other stations to perform UL MU transmission is adopted. The mode may carry a control signaling indicator needed for data transmission in uplink data of the holder node and a feedback of the primary node, additional scheduling frame exchange is not performed, and only quite a few scheduling control overheads are needed.

Several embodiments will be illustrated herein below in conjunction with the drawings.

### Embodiment one

Fig. 10 is a structural diagram of a feedback frame according to an embodiment of the present disclosure. As shown in Fig. 10, the present embodiment describes a design structure of a feedback frame sent by the primary node. It is important to note that the sequence of all information fields in the figure in the present embodiment may be re-determined.

The feedback frame includes a frame header, a frame body and a frame check part.

The frame header part includes: a time length indication Duration domain, which may be used for indicating a time length for sending an uplink radio frame next time or remaining time information of a TXOP gained by a holder node; a sending address domain, indicating address information of equipment for sending the feedback frame; and a receiving address, indicating a receiver of the feedback frame. In a preferred implementation mode of the present disclosure, when the domain is set as a broadcast or multicast group address, the domain is used for indicating to desire a plurality of nodes to receive the feedback frame; and a frame control domain includes information such as a frame type indicator and an indicator indicating whether there is a data buffer to be sent.

Besides, the frame body further includes a acknowledgement/paging control field and N multi-user control/acknowledgement message fields, each multi-user control/acknowledgement message field corresponding to a node. Each multi-user control/acknowledgement message field may have a plurality of formats. Fig. 11 is a format diagram of a multi-user control/acknowledgement message field according to an embodiment of the present disclosure. As shown in Fig. 11, a feedback frame may include a multi-user control/acknowledgement message field having a plurality of formats.

Formats of a multi-user control/acknowledgement message field as shown in Fig. 11 a include:
a user identity indicating a corresponding secondary node, which may specifically be an Association Identity (AID) of a node; a paging indicator, when the indicator is set to be true, it is shown that a station may send the indicator in a next UL MU radio frame, and when the indicator is set to be false, the indicator cannot be sent; a sending parameter indicator, which may include indicators such as a frequency resource and a number of streams; data stream identity and acknowledgement message sequence control information, used for giving a acknowledgement or error indicator to a data unit for those serial numbers of a data stream of a corresponding node; and acknowledgement message or error indication information, used for confirming correct frame receiving, or used for indicating, when there is a data sending error, a data sending error of a corresponding sending node.

Formats of a multi-user control/acknowledgement message field as shown in Fig. 11b include: a user identity, a sending parameter indicator, a paging indicator, data stream identity and acknowledgement message sequence control information, and sending adjustment parameter information, and the sending adjustment parameter information is used for indicating a corresponding secondary node to modulate sending power, delay and frequency offset and to perform link adaptation during next sending by using a Modulation and Coding Scheme (MCS), thus keeping in synchronization with uplink sending of other secondary nodes without mutual interference.

### Embodiment two

An AP supporting multi-user transmission establishes a BSS, a plurality of non-AP STAs and the AP perform an association authentication process to form a BSS. In the abovementioned association process, the AP and the stations perform capability information interaction, which includes an indicator indicating whether to support an UL MU transmission capability. In the present embodiment, it is supposed that association stations STA1-3 support UL MU data sending, and STA1-3 and the AP perform management frame interaction respectively to achieve a negotiation that UL MU shared transmission is supported.

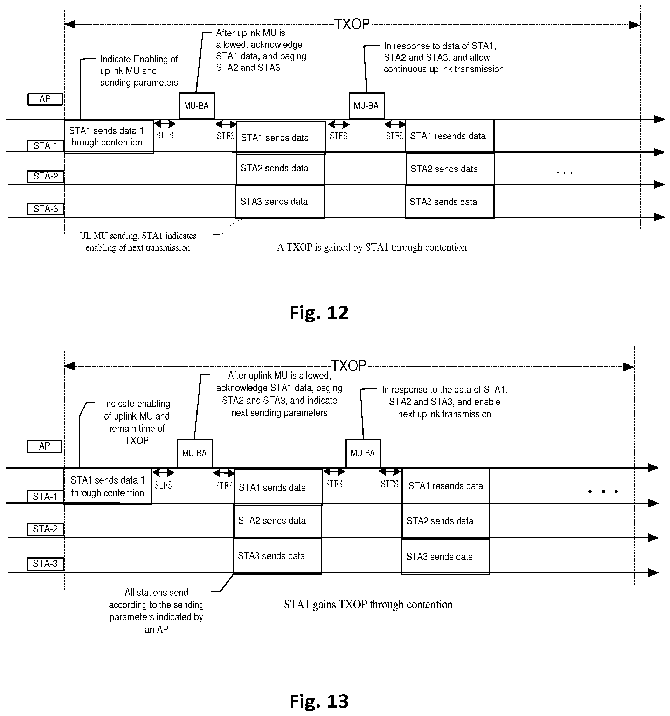

Fig. 12 is a schematic diagram 1 of UL MU sharing of station contention resources according to an embodiment of the present disclosure. Fig. 12 shows an example that STA1 gains a TXOP through contention and shares the TXOP to perform UL MU transmission.
1. STA1 sends an uplink data frame 1 through contention, a frame header part of the sent data frame carrying UL MU shared information, which specifically includes: information for indicating enabling of next transmission for UL MU sharing, and transmission parameter information of a radio frame to be sent next time by a holder node STA1, specifically including sending time length information and information such as a frequency resource occupied by STA1 and a used number of streams.
2. After an AP receives the data frame of STA1, if the data frame enables next transmission for UL MU sharing, the AP sends a Multi-User Block ACK (MU-BA), and confirms data of STA1 by using a multi-user control/acknowledgement field, and the field may adopt a format (a) in Fig. 11. Meanwhile, multi-user control/acknowledgement fields for STA2 and STA3 are carried, formats thereof may be formats (b) in Fig. 11, STA2 and STA3 are paged to perform next multi-user parallel transmission, and information such as a sending parameter (the parameter limits a sending duration, frequency resource and number of streams of STA2 and STA3, thus avoiding mutual interference) and an adjustment parameter (power, frequency offset, time adjustment, and link adaptation feedback information).
3. After receiving a multi-user control/acknowledgement message in the feedback frame MU-BA, STA2 and STA3 confirm to be paged to perform the UL MU shared transmission, so STA2 and STA3 perform parallel transmission with STA1 according to the parameters indicated in the feedback frame, such as uplink OFDMA transmission. The data sent by STA1 may continuously carry the UL MU shared information, so as to continuously enable the UL MU shared transmission.
4. After the AP receives a UL MU data frame sent in Step 3, if the UL MU shared information in the data frame of STA1 indicates continuous enabling of UL MU sharing, the AP sends a feedback frame to confirm data of STA1, STA2 and STA3 and to continuously page STA2 and STA3 for next transmission. At this time, formats of the multi-user control/acknowledgement fields of STA1, STA2 and STA3 carried in the feedback frame may be formats (a) in Fig. 11, and the data is confirmed whilst a paging indicator is utilized to indicate whether the next transmission is allowed.

It is important to note that the feedback frame must include the multi-user control/acknowledgement field for STA1, and STA1 is allowed to perform uplink transmission all the time. When the UL MU shared information sent by STA1 indicates disabling of next multi-user sharing, the AP cannot continuously page STA2 and STA3 in the sent feedback frame, but may confirm the data previously sent by STA2 and STA3.

In addition, sending parameters in the feedback frame sent by the AP should keep consistent with or not conflict with sending parameters carried in a data frame of STA1 corresponding to the feedback frame. Specifically, a next frame sending duration determined in the feedback frame by the AP should be identical to a sending duration indicated by STA1; and information such as a frequency resource and a number of streams of STA2 and STA3 indicated in the feedback frame by the AP should be orthogonal to a frequency resource occupied by STA1 and a number of streams without mutual influence.

In addition, when the AP pages a shared station in a TXOP for the first time, the sent parameters such as the frequency resource and the number of streams and the adjustment parameters may be indicated. When the shared station is not paged for the first time, these pieces of information may not be carried, and these stations send the parameters indicated for the first time.

### Embodiment three

Fig. 13 is a schematic diagram 2 of UL MU sharing of station contention resources according to an embodiment of the present disclosure. Fig. 13 shows an example that STA1 gains a TXOP through contention and shares the TXOP to perform UL MU transmission.
1. STA1 sends an uplink data frame 1 through contention, a frame header part of the sent data frame carrying UL MU shared information, which specifically includes: information for indicating enabling of next transmission for UL MU sharing, and remaining time information for indicating a TXOP gained by a holder node STA1.
2. After an AP receives the data frame of STA1, if the data frame enables UL MU sharing, the AP sends an MU-BA, and confirms data of STA1 by using a multi-user control/acknowledgement field, and the field may adopt a format (a) in Fig. 11. Meanwhile, multi-user control/acknowledgement fields for STA2 and STA3 are carried, formats thereof may be formats (b) in Fig. 11, and STA2 and STA3 are paged to perform next multi-user parallel transmission. The AP determines and indicates sending parameters of each station, indicates, for example, sending duration information for next UL MU transmission, and determines a frequency resource and a number of streams sent by each station.
3. After receiving a multi-user control/acknowledgement message in the feedback frame MU-BA, STA2 and STA3 confirm to be paged to perform the UL MU shared transmission, so STA2 and STA3 perform parallel transmission with STA1 according to the parameters indicated in the feedback frame, such as uplink OFDMA transmission.
4. After the AP receives a UL MU data frame sent in Step 3, if the TXOP gained by STA1 is sufficient for a next multi-user transmission process, the AP sends a feedback frame to confirm data of STA1, STA2 and STA3 and to continuously page STA2 and STA3 for next transmission. At this time, formats of the multi-user control/acknowledgement fields of STA1, STA2 and STA3 carried in the feedback frame may be formats (a) in Fig. 11, and the data is confirmed whilst a paging indicator is utilized to indicate whether the next transmission is allowed.

It is important to note that the feedback frame must include the multi-user control/acknowledgement field for STA1, and STA1 is allowed to perform uplink transmission all the time. The AP should ensure that all transmissions are completed before the TXOP ends.

In addition, sending parameters in the feedback frame sent by the AP may be determined according to situations of each station. Specifically, the AP informs a next-frame sending duration and frequency resources and number of streamss of STA1, STA2 and STA3 in the feedback frame, and all stations send the parameters indicated by the AP.

### Embodiment four

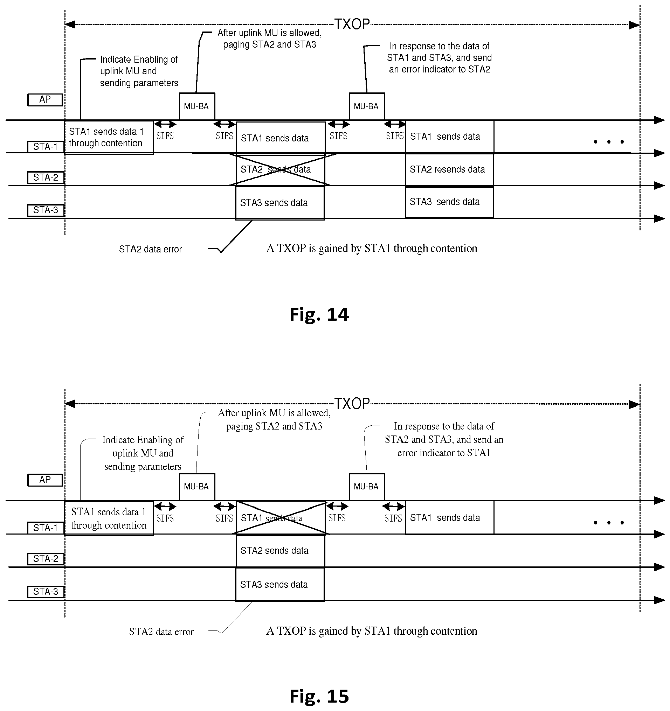

Fig. 14 is a schematic diagram of a data sending error recovery process of a shared secondary node(s) according to an embodiment of the present disclosure. As shown in Fig. 14, a station STA1 gains a TXOP through contention, and shares an error recovery process for a data sending error of a shared secondary node(s) during UL MU transmission.

STA1, STA2 and STA3 perform UL MU data sending to an AP, and the data sending of the shared secondary node(s) STA2 has an error, and data sending of STA1 and STA3 is correct. When the AP sends a feedback frame, acknowledgement messages for STA1 and STA3 are carried, error indication information for STA2 is carried, and continuous UL MU transmission is indicated. So, STA1, STA2 and STA3 continuously perform parallel transmission to the AP, and STA2 may perform retransmission recovery. In conclusion, the shared secondary node(s) (e.g., STA2) may perform retransmission recovery when waiting for the AP to send an error indicator. In addition, sending parameter and/or adjustment parameter information may be indicated whilst the AP sends the error indicator in the feedback frame.

If STA1 indicates disabling of UL MU sharing in a sent radio frame, even if there is a data sending error of the shared secondary node(s), the AP cannot send an error indicator to trigger retransmission recovery of the shared secondary node(s).

### Embodiment five

Fig. 15 is a schematic diagram 1 of a data sending error recovery process of a holder node according to an embodiment of the present disclosure. As shown in Fig. 15, a station STA1 gains a TXOP through contention, and shares an error recovery process for a data sending error of a holder node during UL MU transmission.

STA1, STA2 and STA3 perform UL MU data sending to an AP, and data sending of STA1 has an error, and data sending of STA2 and STA3 is correct. The AP may send a feedback frame after a Short Inter-Frame Space (SIFS), the frame carries acknowledgement messages for STA2 and STA3, it may be indicated that STA2 and STA3 cannot continuously perform UL MU transmission, and error indication information for STA1 is carried. After receiving an error indicator, STA1 performs retransmission recovery immediately.

The AP may actively send the error indicator to the holder node to trigger the holder node to perform retransmission recovery. In addition, the feedback frame sent by the AP must include an information field for STA1, and cannot carry only the acknowledgement messages for STA2 and STA3.

### Embodiment six

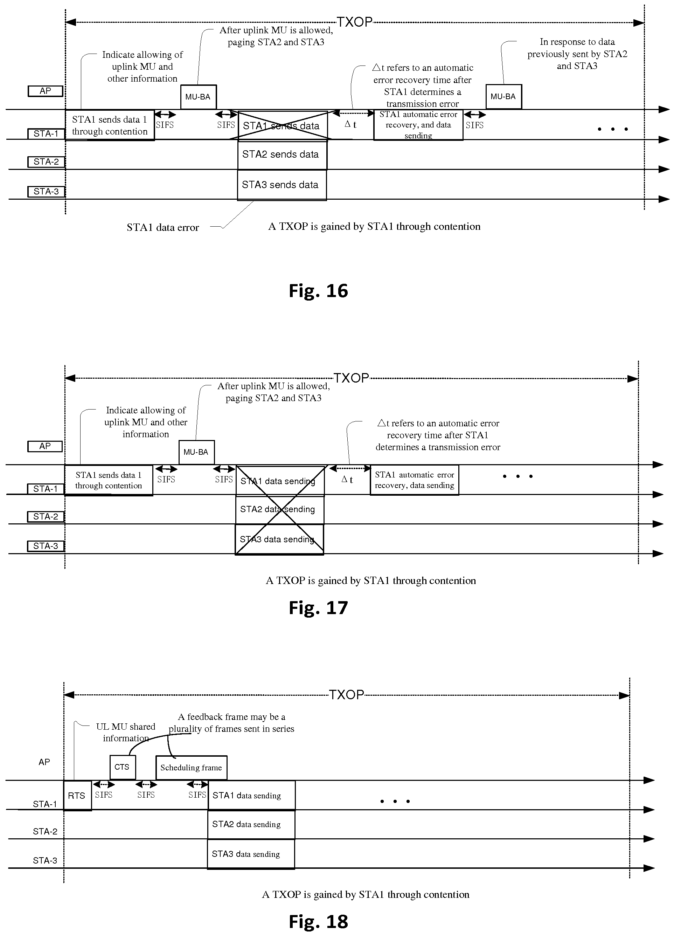

Fig. 16 is a schematic diagram 2 of a data sending error recovery process of a holder node according to an embodiment of the present disclosure. As shown in Fig. 16, a station STA1 gains a TXOP through contention, and shares an error recovery process for a data sending error of a holder node during UL MU transmission.

STA1, STA2 and STA3 perform UL MU data sending to an AP, and data sending of STA1 has an error, and data sending of STA2 and STA3 is correct. At this time, the AP does not send a feedback frame and waits for STA1 to automatically perform retransmission recovery. After sending is completed, if STA1 does not receive a correct feedback of the AP, STA1 waits for an error recovery time Δt. If it is judged that a channel is idle within this time, retransmission recovery is performed after Δt.

If STA1 detects an error indicator sent by the AP for STA1 within the time Δt, STA1 may perform error recovery after receiving the error indicator.

The time Δt is time predefined by a protocol, referring to a retransmission recovery time after a sending station has a sending error. Specifically, the time may be a Point (coordination function) Inter-Frame Space (PIFS) time, or the PIFS time added with an answer waiting expiry time, the answer waiting expiry time being equal to the PIFS time added with a receiving starting delay time.

After receiving a retransmission recovery frame of STA1, data frames sent previously by STA2 and STA3 may be confirmed in the sent MU-BA frame. The shared secondary node(s) cannot self-perform error recovery or sending within the TXOP of the holder node, and only when the indicator of the AP is received, an uplink frame is sent.

### Embodiment seven

Fig. 17 is a schematic diagram of a data sending error recovery process of all nodes according to an embodiment of the present disclosure. As shown in Fig. 17, a station STA1 gains a TXOP through contention, and shares an error recovery process for a data sending error of a holder node during UL MU transmission.

STA1, STA2 and STA3 perform UL MU data sending to an AP, and data sending of all nodes has an error. At this time, the AP does not send a feedback frame and waits for STA1 to automatically perform retransmission recovery. After sending is completed, if STA1 does not receive a correct feedback of the AP, STA1 waits for an error recovery time Δt. If it is judged that a channel is idle within this time, retransmission recovery is performed after Δt.

After receiving a retransmission recovery frame of STA1, the AP may confirm the data frames sent previously by STA2 and STA3 in the sent MU-BA frame. The shared secondary node(s) cannot self-perform error recovery or sending within the TXOP of the holder node, and only when the indicator of the AP is received, an uplink frame is sent.

### Embodiment eight

The present embodiment illustrates an example for a radio frame carrying UL MU shared information and a feedback frame sent by a primary node.

The radio frame carrying the UL MU shared information may be a data frame sent by a holder node, and a frame type of the feedback frame sent by the primary node may be a block ACK frame, as shown in embodiment two-7.

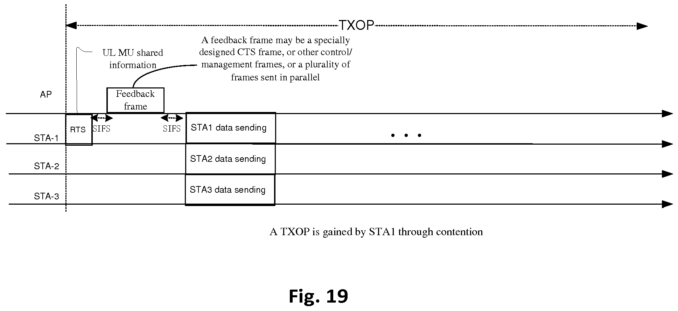

Fig. 18 is a schematic diagram of radio frame carrying multi-user shared information and a feedback frame thereof according to an embodiment of the present disclosure; and Fig. 19 is a schematic diagram of radio frame carrying multi-user shared information and a feedback frame thereof according to an embodiment of the present disclosure. As shown in Fig. 18 and Fig. 19, the radio frame carrying UL MU shared information may be a special RTS frame sent by STA1 or other control/management frames. A feedback frame sent by a primary node may be one or more radio frames sent in series or parallel, and a frame type may be a CTS frame, or other control/management frames, or a combination form of the abovementioned frames.

The above is only the preferred embodiments of the present disclosure, and not intended to limit the present disclosure. There may be various modifications and variations in the present disclosure for those skilled in the art. Any modifications, equivalent replacements, improvements and the like made within the spirit and principle of the present disclosure shall fall within the scope of protection of the present disclosure.

### Industrial Applicability

During a process of applying the technical problem provided in the embodiments of the present disclosure to sharing of resources between stations in a WLAN, a primary node receives a radio frame sent by a secondary node, the secondary node being a secondary node that gains a TXOP, and the radio frame carrying UL MU shared information; and the primary node sends a feedback frame to the secondary node in response to the radio frame, the feedback frame carrying multi-user information of a shared secondary node(s), and the shared secondary node(s) being one or more secondary nodes that perform UL MU shared transmission with the secondary node which gains a TXOP. The present disclosure solves the problem in the related art where resources cannot be fully utilized because resources for UL MU transmission can only be allocated by the primary node, thus also enabling channel resources obtained through contention by the secondary node to be used for UL MU transmission.

## Claims

1. A method for sharing resources between stations in a Wireless Local Area Network (WLAN), comprising:
receiving, by a primary node, a radio frame sent by a secondary node, wherein the secondary node being a secondary node that gains a Transmission Opportunity (TXOP), and Uplink Multi-User (UL MU) shared information is carried in the radio frame; and
sending, by the primary node, a feedback frame to the secondary node in response to the radio frame, the feedback frame carrying multi-user information of shared secondary node(s), and the shared secondary node(s) being one or more secondary nodes that perform UL MU shared transmission with the secondary node which gains a TXOP.

2. The method as claimed in claim 1, wherein the UL MU shared information comprises at least one of the following:
information for indicating enabling of the UL MU shared transmission;
information for indicating a transmission mode of the UL MU shared transmission;
transmission parameter information of a radio frame to be sent next time after the secondary node sends the radio frame; and
remaining time information of the TXOP.

3. The method as claimed in claim 2, wherein
the transmission mode comprises at least one of the following: an Orthogonal Frequency Division Multiple Access (OFDMA) mode, a Frequency Division Multiple Access (FDMA) mode, a Multi-User Multiple Input Multiple Output (MU-MIMO) mode, and an Interleave-Division Multiple-Access (IDMA) mode; and/or,
the transmission parameter information comprises at least one of the following: sending time length information of a radio frame to be sent next time, an occupied frequency resource, and a used number of streams.

4. The method as claimed in claim 1, wherein the multi-user information comprises at least one of the following:
a user identity indicator of each shared secondary node;
transmission parameter information for sending an uplink radio frame next time;
information for giving a acknowledgement or error indicator to the uplink data frame sent by the shared secondary node(s);
adjustment parameter information of the shared secondary node(s);
information for indicating whether to page the shared secondary node(s) to perform the UL MU transmission; and
data stream identity and acknowledgement message sequence control information, the data stream identity and acknowledgement message sequence control information being used for giving a acknowledgement or error indicator to a data unit for a predetermined serial number of a predetermined data stream of a corresponding secondary node.

5. The method as claimed in claim 4, wherein
the transmission parameter information comprises at least one of the following: a sending time length of a radio frame to be sent next time by the shared secondary node(s), an occupied frequency resource, and a used number of streams; and/or,
the adjustment parameter information comprises at least one of the following: a power adjustment parameter, a frequency offset adjustment parameter, a sending delay adjustment parameter, and a rate adjustment parameter.

6. The method as claimed in claim 5, wherein
the sending time length of the radio frame to be sent next time by the shared secondary node(s) is identical to a sending duration indicated by the secondary node; and/or,
a frequency resource occupied by the shared secondary node(s) and/or a used number of streams, comprised in the transmission parameter information, is orthogonal to a frequency resource occupied by the secondary node and/or a used number of streams.

7. The method as claimed in any one of claims 1-6, wherein the feedback frame is a radio frame or a plurality of radio frames sent in parallel and/or in series.

8. The method as claimed in any one of claims 1-6, further comprising:
receiving, by the primary node, uplink data frames sent by the secondary node and the shared secondary node(s) in parallel.

9. The method as claimed in claim 8, further comprising at least one of the following:
when the uplink data frame sent to the primary node by the shared secondary node(s) has an error, sending, by the primary node, error indication information to the shared secondary node(s), the error indication information being used for indicating error recovery transmission of the shared secondary node(s);
when the uplink data frame sent to the primary node by the secondary node has an error, sending, by the primary node, error indication information to the secondary node, the error indication information being used for indicating error recovery transmission of the secondary node; and
when the uplink data frame sent to the primary node by the secondary node has an error, executing, by the secondary node, an error recovery transmission process after waiting for an error recovery time.

10. The method as claimed in claim 9, wherein the error recovery time is a channel detection time of the secondary node after the secondary node determines that the uplink data frame has an error.

11. The method as claimed in any one of claims 1-8, wherein the feedback frame comprises indication information for the secondary node, the indication information being a acknowledgement message or an error indicator.

12. A method for sharing resources between stations in a Wireless Local Area Network (WLAN), comprising:
gaining, by a secondary node, a Transmission Opportunity (TXOP);
sending, by the secondary node, a radio frame to a primary node, Uplink Multi-User (UL MU) shared information is carried in the radio frame; and
receiving, by the secondary node, a feedback frame sent, by the primary node, in response to the radio frame, the feedback frame carrying multi-user information of a shared secondary node(s), and the shared secondary node(s) being one or more secondary nodes that perform UL MU shared transmission with the secondary node which gains a TXOP.

13. The method as claimed in claim 12, wherein the UL MU shared information comprises at least one of the following:
information for indicating enabling of the UL MU shared transmission;
information for indicating a transmission mode of the UL MU shared transmission;
transmission parameter information of a radio frame to be sent next time after the secondary node sends the radio frame; and
remaining time information of the TXOP.

14. The method as claimed in claim 13, wherein
the transmission mode comprises at least one of the following: an Orthogonal Frequency Division Multiple Access (OFDMA) mode, a Frequency Division Multiple Access (FDMA) mode, a Multi-User Multiple Input Multiple Output (MU-MIMO) mode, and an Interleave-Division Multiple-Access (IDMA) mode; and/or,
the transmission parameter information comprises at least one of the following: sending time length information of a radio frame to be sent next time, an occupied frequency resource, and a used number of streams.

15. The method as claimed in claim 12, wherein the multi-user information comprises at least one of the following:
transmission parameter information for sending an uplink radio frame next time;
information for giving a acknowledgement or error indicator to the uplink data frame sent by the shared secondary node(s);
adjustment parameter information of the shared secondary node(s);
information for indicating whether to page the shared secondary node(s) to perform the UL MU transmission; and
data stream identity and acknowledgement message sequence control information, the data stream identity and acknowledgement message sequence control information being used for giving a acknowledgement or error indicator to a data unit for a predetermined serial number of a predetermined data stream of a corresponding secondary node.

16. The method as claimed in claim 15, wherein
the transmission parameter information comprises at least one of the following: a sending time length of a radio frame to be sent next time by the shared secondary node(s), an occupied frequency resource, and a used number of streams; and/or,
the adjustment parameter information comprises at least one of the following: a power adjustment parameter, a frequency offset adjustment parameter, and a sending delay adjustment parameter.

17. The method as claimed in claim 16, wherein
the sending time length of the radio frame to be sent next time by the shared secondary node(s) is identical to a sending duration indicated by the secondary node; and/or,
a frequency resource occupied by the shared secondary node(s) and/or a used number of streams, comprised in the transmission parameter information, is orthogonal to a frequency resource occupied by the secondary node and/or a used number of streams.

18. The method as claimed in any one of claims 12-17, wherein the feedback frame is a radio frame or a plurality of radio frames sent in parallel and/or in series.

19. The method as claimed in any one of claims 12-17, further comprising:
sending, by the secondary node and the shared secondary node(s), uplink data frames to the primary node in parallel.

20. The method as claimed in claim 19, further comprising at least one of the following:
when the uplink data frame sent to the primary node by the shared secondary node(s) has an error, sending, by the primary node, error indication information to the shared secondary node(s), the error indication information being used for indicating error recovery transmission of the shared secondary node(s);
when the uplink data frame sent to the primary node by the secondary node has an error, sending, by the primary node, error indication information to the secondary node, the error indication information being used for indicating error recovery transmission of the secondary node; and
when the uplink data frame sent to the primary node by the secondary node has an error, executing, by the secondary node, an error recovery transmission process after waiting for an error recovery time.

21. The method as claimed in claim 20, wherein the error recovery time is a channel detection time of the secondary node after the secondary node determines that the uplink data frame has an error.

22. The method as claimed in any one of claims 12-17, wherein the feedback frame comprises indication information for the secondary node, the indication information being a acknowledgement message or an error indicator.

23. A method for sharing resources between stations in a Wireless Local Area Network (WLAN), comprising:
receiving, by shared secondary node(s), a feedback frame sent by a primary node, the feedback frame being sent, by the primary node, in response to a radio frame sent by a secondary node that gains a Transmission Opportunity (TXOP), the shared secondary node(s) being one or more secondary nodes that perform Uplink Multi-User (UL MU) shared transmission with the secondary node, and the feedback frame carrying multi-user information of the shared secondary node(s); and
sending, by the shared secondary node(s) and the secondary node, uplink data frames to the primary node in parallel.

24. The method as claimed in claim 23, wherein the multi-user information comprises at least one of the following:
transmission parameter information for sending an uplink radio frame next time;
information for giving a acknowledgement or error indicator to the uplink data frame sent by the shared secondary node(s);
adjustment parameter information of the shared secondary node(s);
information for indicating whether to page the shared secondary node(s) to perform the UL MU transmission; and
data stream identity and acknowledgement message sequence control information, the data stream identity and acknowledgement message sequence control information being used for giving a acknowledgement or error indicator to a data unit for a predetermined serial number of a predetermined data stream of a corresponding secondary node.

25. The method as claimed in claim 24, wherein
the transmission parameter information comprises at least one of the following: a sending time length of a radio frame to be sent next time by the shared secondary node(s), an occupied frequency resource, and a used number of streams; and/or,
the adjustment parameter information comprises at least one of the following: a power adjustment parameter, a frequency offset adjustment parameter, and a sending delay adjustment parameter.

26. The method as claimed in claim 25, wherein
the sending time length of the radio frame to be sent next time by the shared secondary node(s) is identical to a sending duration indicated by the secondary node; and/or,
a frequency resource occupied by the shared secondary node(s) and/or a used number of streams, comprised in the transmission parameter information, is orthogonal to a frequency resource occupied by the secondary node and/or a used number of streams.

27. The method as claimed in any one of claims 23-26, wherein the feedback frame is a radio frame or a plurality of radio frames sent in parallel and/or in series.

28. The method as claimed in claim 23, further comprising at least one of the following:
when the uplink data frame sent to the primary node by the shared secondary node(s) has an error, sending, by the primary node, error indication information to the shared secondary node(s), the error indication information being used for indicating error recovery transmission of the shared secondary node(s);
when the uplink data frame sent to the primary node by the secondary node has an error, sending, by the primary node, error indication information to the secondary node, the error indication information being used for indicating error recovery transmission of the secondary node; and
when the uplink data frame sent to the primary node by the secondary node has an error, executing, by the secondary node, an error recovery transmission process after waiting for an error recovery time.

29. The method as claimed in claim 28, wherein the error recovery time is a channel detection time of the secondary node after the secondary node determines that the uplink data frame has an error.

30. A device for sharing resources between stations in a Wireless Local Area Network (WLAN), applied to a primary node, the device comprising:
a first receiving module, configured to receive a radio frame sent by a secondary node, the secondary node being a secondary node that gains a Transmission Opportunity (TXOP), and Uplink Multi-User (UL MU) shared information is carried in the radio frame; and
a first sending module, configured to send a feedback frame to the secondary node in response to the radio frame, the feedback frame carrying multi-user information of a shared secondary node(s), and the shared secondary node(s) being one or more secondary nodes that perform UL MU shared transmission with the secondary node which gains a TXOP.

31. The device as claimed in claim 30, further comprising:
a second receiving module, configured to receive uplink data frames sent by the secondary node and the shared secondary node(s) in parallel.

32. The device as claimed in claim 31, wherein the first sending module is further configured to:
send, when the uplink data frame sent to the primary node by the shared secondary node(s) has an error, error indication information to the shared secondary node(s), the error indication information being used for indicating error recovery transmission of the shared secondary node(s);
send, when the uplink data frame sent to the primary node by the secondary node has an error, error indication information to the secondary node, the error indication information being used for indicating error recovery transmission of the secondary node; and
indicate, when the uplink data frame sent to the primary node by the secondary node has an error, the secondary node to execute an error recovery transmission process after waiting for an error recovery time.

33. A device for sharing resources between stations in a Wireless Local Area Network (WLAN), applied to a secondary node, the device comprising:
a gaining module, configured to gain a Transmission Opportunity (TXOP);
a second sending module, configured to send a radio frame to a primary node, Uplink Multi-User (UL MU) shared information is carried in the radio frame; and
a third receiving module, configured to receive a feedback frame sent, by the primary node, in response to the radio frame, the feedback frame carrying multi-user information of a shared secondary node(s), and the shared secondary node(s) being one or more secondary nodes that perform UL MU shared transmission with the secondary node which gains a TXOP.

34. The device as claimed in claim 33, further comprising:
a third sending module, configured to send uplink data frames to the primary node in parallel with the shared secondary node(s).

35. The device as claimed in claim 34, wherein the third receiving module is further configured to:
receive, when the uplink data frame sent to the primary node by the secondary node has an error, error indication information sent by the primary node, the error indication information being used for indicating error recovery transmission of the secondary node; and/or
execute, when the uplink data frame sent to the primary node by the secondary node has an error, an error recovery transmission process after waiting for an error recovery time.

36. A device for sharing resources between stations in a Wireless Local Area Network (WLAN), applied to shared secondary node(s), the device comprising:
a fourth receiving module, configured to receive a feedback frame sent by a primary node, the feedback frame being sent, by the primary node, in response to a radio frame sent by a secondary node that gains a Transmission Opportunity (TXOP), the shared secondary node(s) being one or more secondary nodes that perform UL MU shared transmission with the secondary node which gains a TXOP, and the feedback frame carrying multi-user information of the shared secondary node(s); and
a fourth sending module, configured to send uplink data frames to the primary node in parallel with the secondary node.

37. The device as claimed in claim 36, wherein the fourth receiving module is further configured to:
receive, when the uplink data frame sent to the primary node by the shared secondary node(s) has an error, error indication information sent by the primary node, the error indication information being used for indicating error recovery transmission of the shared secondary node(s).
